# EUROPÄISCHE PATENTSCHRIFT

(11) **EP 2 298 690 B1**
(45) Veröffentlichungstag und Bekanntmachung des Hinweises auf die Patenterteilung: **30.03.2016**
(21) Anmeldenummer: 10009250.1
(22) Anmeldetag: 06.09.2010
(51) Int. Cl.: B66F 9/075, B60K 1/04, B60S 5/06

(54) **Batteriewechselsystem eines Elektrofahrzeugs**
Battery exchange system of an electric car
Système de changement de batterie d'un véhicule électrique

(30) Priorität: 21.09.2009 DE 102009042317; 30.08.2010 DE 102010035818
(43) Veröffentlichungstag der Anmeldung: 23.03.2011
(73) Patentinhaber: STILL GmbH, 22113 Hamburg (DE)
(72) Erfinder: Arndt, Michael, 22457 Hamburg (DE); Baumann, Peter, 22941 Bargteheide (DE); Claus, Alexander, 22303 Hamburg (DE)
(74) Vertreter: Geirhos, Johann

(56) Entgegenhaltungen:
- EP-A2- 1 095 831
- EP-A2- 1 415 874
- EP-A2- 1 712 513
- EP-A2- 1 808 403
- DE-A1-102005 001 276
- DE-A1-102006 022 743
- GB-A- 1 253 469
- JP-A- 2007 031 074
- US-A- 5 934 694
- US-A1- 2007 292 252

## Beschreibung

Die Erfindung betrifft ein Batteriewechselsystem eines Elektrofahrzeugs, insbesondere eines Flurförderzeugs, mit folgenden Merkmalen:
- einem Batterieblock, der in einem Batteriefach des Elektrofahrzeugs angeordnet ist und in im Wesentlicher horizontaler Richtung in das Batteriefach hinein bzw. aus dem Batteriefach heraus bewegbar ist,
- einer Wechseleinrichtung umfassend eine Wechselvorrichtung und/oder eine Ablagevorrichtung zur Handhabung und zum Transport des Batterieblocks
- und einer Vorrichtung zur Fixierung des Batterieblocks in dem Batteriefach und auf der Wechseleinrichtung in mindestens einer Bewegungsrichtung.

Batterie-elektrisch betriebene Flurförderzeuge, insbesondere Gegengewichtsgabelstapler, sind in jüngerer Zeit häufig mit einem seitlichen Batteriewechsel in horizontaler Richtung ausgeführt. Das Batteriewechselsystem umfasst hierbei drei Komponenten, nämlich das Flurförderzeug mit dem Batteriefach, das den Batterieblock aufnimmt, als erste Komponente, den zu wechselnden Batterieblock als zweite Komponente und die Wechseleinrichtung, um den Batterieblock während des Batteriewechsels zu handhaben, als dritte Komponente.

Um den Batterieblock zu wechseln, sind Wechseleinrichtung bekannt, die eine Wechselvorrichtung und gegebenenfalls eine Ablagevorrichtung umfassen, mittels der der Batterieblock aus dem Batteriefach des Flurförderzeugs in horizontaler Richtung herausbewegt oder in das Batteriefach hineinbewegt werden kann und zu einer Ladestation bewegt und auf einer Ablagevorrichtung abgestellt werden kann. Derartige Wechseleinrichtungen können als Wechselgestelle, Aufnahmegesteile, Transportgestelle und Ablagestelle ausgebildet werden.

Die Wechseleinrichtung kann zudem von einer fahrzeuginternen oder einer externen Rollenbahn gebildet werden. Zudem sind Wechseleinrichtungen bekannt, mit denen der Batterieblock unterfahren und zum Batteriewechsel angehoben werden kann. Der aus dem Batteriefach entnommene Batterieblock wird anschließend mittels der Wechseleinrichtung zu der Ladestation gebracht und auf einer Ablagevorrichtung abgestellt, die ebenfalls einen Bestandteil der Wechseleinrichtung bildet.

Aus der EP 1 415 874 A2 ist ein Batteriewechselsystem eines Flurförderzeugs bekannt, bei dem als Wechseleinrichtung eine externe Rollenbahn vorgesehen ist, mittels der der Batterieblock zum Batteriewechsel unterfahren und angehoben werden kann.

Während des Betriebs des Flurförderzeugs ist der Batterieblock in dem Batteriefach angeordnet und in dem Batteriefach gegen einen Verrutschen zu sichern und zu fixieren, insbesondere in Fahrzeugquerrichtung und in Fahrzeuglängsrichtung, um ein Verkanten des Batterieblocks in dem Batteriefach zu vermeiden. Ein Verrutschen des Batterieblocks in dem Batteriefach kann zudem zu Beschädigungen an dem Batterieblock führen, insbesondere durch scharfe Kanten, Schweißnähte oder Schweißrückstände in dem Batteriefach. Derartige Beschädigungen an dem Batterieblock führen zu einem hohen Serviceaufwand und einem häufigen Ersatz des Batterieblocks. Ein in dem Batteriefach verkanteter Batterieblock erschwert zudem den Batteriewechsel mit der Wechselvorrichtung und macht diesen zeitlich aufwändig.

Darüber hinaus stellt das Verrutschen des Batterieblocks in dem Batteriefach während des Betriebs des Flurförderzeugs ein sicherheitsrelevantes Problem dar. Aus Sicherheitsgründen ist daher eine Bewegung des Batterieblocks in dem Batteriefach während des Betriebs des Flurförderzeugs zu vermeiden. Bewegungen des Batterieblocks während des Betriebs des Flurförderzeugs führen zu zusätzlichen Belastungen an einer Batterieverriegelung, die vorgesehen ist, um ein ungewolltes Herausrutschen bzw. Herausrollen der Batterie bei einem Flurförderzeug mit einem seitlichen Batteriewechsel aus der Rahmenseitenwand zu vermeiden. Bewegungen des Batterieblocks während des Betriebs des Flurförderzeugs können weiterhin zu einem Anschlagen des Batterieblocks während eines Beschleunigungsvorgangs oder eines Verzögerungsvorgangs an die Wände des Batteriefachs führen. Um ein derartiges Verrutschen des Batterieblocks während des Betriebs des Flurförderzeugs zu vermeiden, werden bislang Batterieblocksicherungen in dem Batteriefach des Flurförderzeugs eingesetzt, beispielsweise Anschläge oder Halteleisten. Aus der EP 1 808 403 A2 ist ein Flurförderzeug bekannt, bei dem als Batteriesicherung gegen ein Verrutschen des Batterieblocks in einem Batteriefach des Flurförderzeugs Rasthaken angeordnet sind. Aus der EP 1 712 513 A2 ist ein Flurförderzeug bekannt, bei dem Batteriespanner in dem Batteriefach verwendet werden, um eine Bewegung des Batterieblocks in dem Batteriefach zu vermeiden. Aus der bereits genannten EP 1 415 874 A1 ist bekannt, den Batterieblock auf Gummilagern an der Bodenfläche des Batteriefachs abzustellen. Ebenfalls offenbart die GB 1 253 469 ein Flurförderzeug, bei der an Auflagern des Batteriefachbodens Gummilager angeordnet sind, auf denen der Batterieblock im Batteriefach aufsteht. Derartige Rasthaken oder Batteriespanner weisen jedoch einen hohen zusätzlichen Bauaufwand auf. Bei Gummilagern in dem Batteriefach erwies sich als Nachteil, dass aufgrund der hohen Belastung der Gummilager eine dauerhafte Sicherung des Batterieblocks nicht erzielbar war und die Gummilager an dem Batteriefach häufig ausgetauscht werden mussten.

Aus der DE 10 2005 001 276 A1 ist ein Flurförderzeug mit einem seitlichen Wechsel des Batterieblocks in horizontaler Richtung bekannt, bei dem der Batterieblock in Bewegungsrichtung versetzt zum Schwerpunkt mit Kranösen versehen ist. Beim Herausschieben des Batterieblocks aus dem Batteriefach verkantet der kippende Batterieblock in dem Batteriefach, wozu an der Oberseite des Batteriefachs ein Anschlag angeordnet ist, der aus einem gummieleastischen Bauteil gebildet sein kann.

Zudem ist der Batterieblock auf der Wechseleinrichtung während des Batteriewechsels und dessen Transport gegen ein Verrutschen zu sichern, da ein Verrutschen des Batterieblocks auf der Wechseleinrichtung den Wechselvorgang erschwert und verlängert. Aus der EP 1 095 837 B1 ist eine Wechseleinrichtung mit einer als externe Rollenbahn ausgebildeten Wechselvorrichtung und einer als Batterieablage ausgebildeten Ablagevorrichtung bekannt, bei der der Batterieblock auf der Wechseleinrichtung über Seitenbleche und Anschläge als Transportsicherung gegen Verrutschen gesichert wird.

Während des Wechsels des Batterieblocks kann es bei bekannten Batteriewechselsystemen zu einem Verkanten des Batterieblocks in dem Batteriefach kommen, so dass der Batteriewechsel nur durch Ruckeln und zwischenzeitliches Absetzen der Wechseleinrichtung gewechselt werden kann, so dass sich ein aufwändiger Batteriewechsel einstellt.

Mit bekannten Batteriesicherungen in dem Batteriefach des Flurförderzeugs und Transportsicherungen an der Wechseleinrichtung als Vorrichtungen zur Fixierung des Batterieblocks in dem Batteriefach und/oder auf der Wechseleinrichtung kann es somit beim Wechsel des Batterieblocks und beim Transport des Batterieblocks zu Beschädigungen an dem Batterieblock kommen. Zudem weisen bekannte Batteriesicherung und Transportsicherungen einen hohen Bauaufwand auf.

Der vorliegenden Erfindung liegt die Aufgabe zugrunde, ein Batteriewechselsystem zur Verfügung zu stellen, mit dem der Batteriewechsel erleichtert wird, Beschädigungen an dem Batterieblock beim Batteriewechsel vermieden werden können und der Batterieblock wirkungsvoll und mit geringem Bauaufwand gegen ein Verrutschen gesichert werden kann.

Diese Aufgabe wird erfindungsgemäß dadurch gelöst, dass die Vorrichtung zur Fixierung des Batterieblocks in dem Batteriefach und auf der Wechseleinrichtung von einer reibungserhöhenden und rutschhemmenden Zwischenschicht gebildet ist, die zwischen der Batterieblockunterseite und einem Batteriefachboden des Batteriefachs des Elektrofahrzeugs und zwischen der Batterieblockunterseite und einer mit der Batterieblockunterseite zusammenwirkenden Aufstandsfläche der Wechseleinrichtung angeordnet ist, wobei die Batterieblockunterseite mit der reibungserhöhenden und rutschhemmenden Zwischenschicht versehen ist. Mit einer erfindungsgemäßen reibungserhöhenden und rutschhemmenden Zwischenschicht zwischen der Batterieblockunterseite und dem Batteriefachboden des Flurförderzeugs kann auf einfache Weise der Batterieblock gegen ein Verrutschen in dem Batteriefach des Flurförderzeugs gesichert werden. Hierdurch wird auf einfache Weise ein Verkanten des Batterieblocks im Batteriefach vermieden, so dass der Batteriewechsel erleichtert wird. Zudem können hierdurch Beschädigungen an dem Batterieblock auf einfache Weise vermieden werden. Darüber hinaus wird ein verbessertes und sicheres Fahrverhalten des Flurförderzeugs erzielt, da beim Beschleunigen und Verzögern sowie während einer Kurvenfahrt unbeabsichtigte Bewegungen des Batterieblocks im Batteriefach in Fahrzeuglängsrichtung und in Fahrzeugquerrichtung durch die reibungserhöhende und rutschhemmende Zwischenschicht zwischen der Batterieblockunterseite und dem Batteriefachboden vermieden werden. Weiterhin ist bei der Erfindung eine reibungserhöhende und rutschhemmende Zwischenschicht zwischen der Batterieblockunterseite und einer Aufstandsfläche der Wechseleinrichtung ausgebildet, so dass weiterhin während des Batteriewechsels und während des Transports des Batterieblocks auf der Wechseleinrichtung der Batterieblock auf einfache Weise gegen ein Verrutschen gesichert werden kann, wodurch der Batteriewechsel weiter vereinfacht und erleichtert wird.

Gemäß einer bevorzugten Ausgestaltungsform der Erfindung ist die Zwischenschicht von einem Klettverschlusssystem gebildet, wobei eine Klettverschlusskomponente an der Batterieblockunterseite angeordnet ist und eine weitere Klettverschlusskomponente an der Oberseite des Batteriefachbodens und der mit der Batterieblockunterseite zusammenwirkenden Aufstandsfläche der Wechseleinrichtung angeordnet ist. Mit einem Klettverschlusssystem kann auf einfache Weise der Reibbeiwert zwischen dem Batterieblock und dem Batteriefachboden des Batteriefachs bzw, der Aufstandsfläche der Wechseleinrichtung erhöht werden, um während des Betriebs des Flurförderzeugs und während des Batteriewechsels sowie des Transports des Batterieblocks auf der Wechseleinrichtung ein Verrutschen des Batterieblocks zu vermeiden.

Die Zwischenschicht kann gemäß einer weiteren Ausgestaltungsform der Erfindung von einem metallischen Reibbelag, insbesondere einem Streckmetall, gebildet sein. Mit einem Streckmetall als Zwischenschicht kann ebenfalls auf einfache Weise der Reibbeiwert zwischen dem Batterieblock und dem Batteriefachboden des Batteriefachs bzw, der Aufstandsfläche der Wechseleinrichtung erhöht werden, um während des Betriebs des Flurförderzeugs und während des Batteriewechsels sowie des Transports des Batterieblocks auf der Wechseleinrichtung ein Verrutschen des Batterieblocks zu vermeiden.

Besondere Vorteile ergeben sich, wenn gemäß einer vorteilhaften und bevorzugten Ausgestaltungsform der Erfindung die Zwischenschicht von einer an der Batterieblockunterseite angeordneten Beschichtung gebildet ist. Die Sicherung des Batterieblocks in dem Batteriefach gegen Verrutschen kann mit einer Beschichtung des Batteriefachbodens erzielt werden. Entsprechend kann der Batterieblock gegen Verrutschen auf der Wechseleinrichtung gesichert werden, wenn die Aufstandsfläche der Wechseleinrichtung mit einer entsprechenden Beschichtung versehen ist.

Mit besonderem Vorteil ist gemäß einer bevorzugten Ausführungsform der Erfindung die Batterieblockunterseite mit einer reibungserhöhenden und rutschhemmenden Zwischenschicht, insbesondere einer Beschichtung, versehen. Mit einer Beschichtung der Batterieblockunterseite können die obengenannten Probleme gelöst werden, indem lediglich eine Komponente des Batteriewechselsystems mit einer reibungserhöhenden und rutschhemmenden Zwischenschicht versehen werden muss, so dass die Aufgabe mit besonders geringem Bauaufwand gelöst wird. Die Beschichtung als reibungserhöhende und rutschhemmende Zwischenschicht an der Batterieblockunterseite ermöglicht eine Sicherung des Batterieblocks in dem Batteriefach des Flurförderzeugs während des Betriebs des Flurförderzeugs gegen unbeabsichtigte Bewegungen und Verrutschen in Fahrzeuglängsrichtung und Fahrzeugquerrichtung und gleichzeitig eine Sicherung des Batterieblocks während des Wechsels und während des Transports auf der Wechseleinrichtung gegen ein Verrutschen. Der Batterieblock kann somit mit einer derartigen Beschichtung an der Batterieblockunterseite auf einfache Weise gegen Verrutschen gesichert werden, wodurch Beschädigungen an dem Batterieblock wirksam vermieden werden, ein sicherer Betrieb des Flurförderzeugs ermöglicht wird und ein einfacher Batteriewechsel erzielt wird.

Die Beschichtung ist gemäß einer bevorzugten Ausführungsform der Erfindung von einer Gummibeschichtung, insbesondere einem Gummibelag, gebildet. Mit einer Gummibeschichtung bzw. einem Gummibelag an der Batterieblockunterseite kann mit besonders einfachem Bauaufwand der Batterieblock gegen Verrutschen im Batteriefach des Flurförderzeugs während des Betriebs des Flurförderzeugs und auf der Wechseleinrichtung während des Batteriewechsels und des Transports des Batterieblocks gesichert werden und zudem die Batterieblockunterseite vor Beschädigungen wirksam geschützt werden. Durch die Dicke und Härte der Gummibeschichtung bzw, des Gummibelags kann hierbei abhängig von dem Gewicht des Batterieblocks die Rutschfestigkeit auf einfache Weise erhöht werden.

Gemäß einer vorteilhaften Ausgestaltungsform der Erfindung ist die Gummibeschichtung als eine Gummiwanne ausgebildet, in der der Batterieblock mit der Batterieblockunterseite steht. Mit einer derartigen Gummiwanne, in der der Batterieblock steht, kann der Batterieblock gegen Verrutschen im Batteriefach während des Betriebs des Flurförderzeug und gegen Verrutschen auf der Wechseleinrichtung während des Batteriewechsels und des Transports des Batterieblocks gesichert werden, wobei zusätzlich ein wirksamer Schutz des der Batterieblockunterseite erzielbar ist.

Bevorzugt ist die Gummiwanne von der Batterieblockunterseite an den unteren Bereich der Seitenwände des Batterieblocks hinausgezogen. Die Gummiwanne bildet somit einen Gummiüberzieher an der Batterieblockunterseite und dem unteren Bereich der Seitenwände des Batterieblocks. Mit einer derartigen Ausgestaltung der Gummiwanne kann eine einfache und kostengünstige Nachrüstung bestehender Batterieblöcke mit einer rutschhemmenden Zwischenschicht an der Batterieblockunterseite erzielt werden.

Der als Gummiwanne ausgebildete Gummibelag kann an dem Batterieblock beispielsweise durch Erwärmen und Aufschrumpfen befestigt werden. Eine einfache Befestigung der Gummiwanne an dem Batterieblock ist ebenfalls erzielbar, wenn die Gummiwanne an den Seitenwänden des Batterieblocks und/oder mit einem Wanneninnenbereich an der Batterieblockunterseite verklebt oder anvulkansiert oder aufgeschrumpft ist. Sofern gemäß einer vorteilhaften Weiterbildung der Erfindung die Gummiwanne derart bemessen ist, dass die Gummiwanne nach dem Überziehen auf den Batterieblock durch Eigenelastizität an dem Batterieblock gehalten ist, ergibt sich eine einfache Befestigung der Gummiwanne an dem Batterieblock, wobei insbesondere bei einer Nachrüstung eines bestehenden Batterieblocks kein zusätzlicher Bauaufwand für die Befestigung der reibungserhöhenden Zwischenschicht an der Batterieblockunterseite entsteht.

Zweckmäßigerweise besteht die Gummibeschichtung bzw. der Gummibelag bzw, die Gummiwanne aus einem säurebeständigen Gummi, so dass sich eine hohe Beständigkeit des Gummibelags bzw, der Gummibeschichtung gegenüber der Batteriesäure des Batterieblocks ergibt.

Die Batterieblockunterseite kann hierbei punktuell oder flächig mit der Zwischenschicht versehen sein. Bei einer flächigen Ausbildung der Zwischenschicht an der Batterieblockunterseite kann die Batterieblockunterseite vollflächig oder teilflächig mit der Zwischenschicht versehen sein. Bei einer teilflächigen Anordnung der Beschichtung ergeben sich besondere Vorteile, wenn die Beschichtung streifenförmig oder rahmenförmig am Außenrand der Batterieblockunterseite angeordnet ist.

Eine von einer Gummibeschichtung bzw, einem Gummibelag oder einer Gummiwanne gebildete Zwischenschicht kann an der Batterieblockunterseite gemäß einer bevorzugten Ausführungsform der Erfindung mit geringem Herstellaufwand aufvulkanisiert werden. Hierdurch kann mit geringem Bauaufwand eine dauerhafte und sichere Befestigung der Gummibeschichtung bzw. des Gummibelags an der Batterieblockunterseite erzielt werden.

Zudem kann eine von einer Gummibeschichtung bzw. einem Gummibelag oder einer Gummiwanne gebildete Zwischenschicht an der Batterieblockunterseite verklebt sein, wodurch auf einfache Weise eine sichere und dauerhafte Befestigung erzielbar ist. Eine Gummibeschichtung kann zudem mit geringem Herstellaufwand an der Batterieblockunterseite aufgestrichen oder auflackiert sein.

Die Klettverschlusskomponente eines Klettverschlusssystems bzw. eine als Gummileiste oder Gummiplatte ausgebildete Gummibeschichtung oder ein Streckmetall können an der Batterieblockunterseite lösbar befestigt sein, beispielsweise geschraubt oder genietet werden. Zudem ist eine Klemmverbindung, beispielsweise mittels einer Klemmleiste, oder eine Steckverbindung, beispielsweise mittels einer Einsteckleiste, als lösbare Befestigung möglich, mit der bevorzugt Gummileisten auf einfache Weise befestigt werden können.

Zudem ist es möglich, die Zwischenschicht, insbesondere einen metallischen Reibbelag oder eine mit einer Gummileiste oder Gummiplatte versehene Metallplatte, an der Batterieblockunterseite stoffschlüssig zu verbinden, beispielsweise mittels Schweißen oder Löten.

Sofern die Wechseleinrichtung von einer Rollenbahn, beispielsweise einer fahrzeuginternen oder externen Rollenbahn, gebildet ist, ist die Zwischenschicht gemäß einer zweckmäßigen Weiterbildung der Erfindung mit einer derartigen Härte versehen, dass ein Eindrücken der Rollen der Rollenbahn in die Zwischenschicht vermieden wird. Das Herausrollen bzw. Hineinrollen des Batterieblocks in das Batteriefach bzw. das Bewegen des Batterieblocks auf der Wechseleinrichtung wird hierdurch vereinfacht, wodurch der Batterieblock mit geringem Kraftaufwand gewechselt werden kann.

Zur vorliegenden Erfindung gehört ebenfalls ein Batterieblock mit einer an der Batterieblockunterseite angeordneten reibungserhöhenden und rutschhemmenden Zwischenschicht zur Verwendung in dem oben beschriebenen Batteriewechselsystem.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Batteriewechselsystem und
- Figur 2a bis 2e: mehrere Ausführungsformen einer erfindungsgemäßen Beschichtung an einer Batterieblockunterseite eines Batterieblocks.

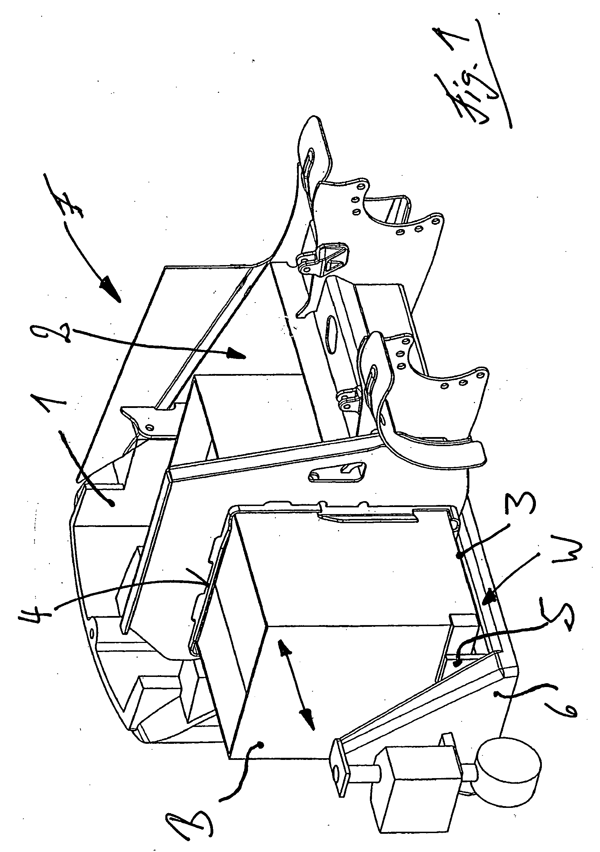

In der Figur 1 ist ein erfindungsgemäßes Batteriewechselsystem für ein als Gegengewichtsgabelstapler ausgebildetes Flurförderzeug mit einem seitlichen Batteriewechsel, als Beispiel für ein Elektrofahrzeug dargestellt.

Von dem Flurförderzeug F ist ein Rahmenabschnitt 1 dargestellt, der ein Batteriefach 2 zur Aufnahme eines Batterieblocks B bildet. Der Batterieblock B steht hierbei mit einer Batterieblockunterseite 3 auf einem Batteriefachboden des Batteriefachs 2 auf. Der Batteriefachboden kann hierbei von einer Bodenplatte des Flurförderzeugs gebildet werden, wobei der Batterieblock B direkt auf dem Batteriefachboden aufsteht oder mittels einer fahrzeuginternen Rollenbahn. Das Flurförderzeug F ist auf einen seitlichen Wechsel des Batterieblocks B eingerichtet, wobei der Rahmenabschnitt 1 mit einer seitlichen Öffnung 4 versehen ist, durch die der Batterieblock B in das Batteriefach 2 in horizontaler Richtung hineinbewegt bzw. herausbewegt werden kann.

Das Batteriewechselsystem umfasst weiterhin eine Wechseleinrichtung W, mittels der der Batterieblock B während des Batteriewechsels aus dem Batteriefach 2 herausbewegt bzw. in das Batteriefach hineinbewegt und zu einer Ladestation transportiert werden kann. Die Wechseleinrichtung W ist im vorliegenden Ausführungsbeispiel von einer Wechselvorrichtung 5, beispielsweise einer externen Rollenbahn oder einem Wechselgestellt, gebildet, die auf einen Hubwagen 6 aufgesetzt ist. Die Wechseleinrichtung W umfasst weiterhin eine nicht näher dargestellte Ablagevorrichtung, auf der der Batterieblock B an einer Ladestation abgestellt werden kann.

Erfindungsgemäß ist die Batterieblockunterseite 3 des Batterieblocks B mit einer reibungserhöhenden und einer rutschhemmenden Zwischenschicht Z versehen, die von einer säurebeständigen Gummibeschichtung G, insbesondere einem säurebeständigen Gummibelag, gebildet ist. Die Gummibeschichtung G ist bevorzugt an der Batterieblockunterseite 3 des Batterieblocks B aufvulkanisiert, wodurch eine dauerhafte Befestigung der Gummibeschichtung G an der Batterieblockunterseite 3 erzielbar ist.

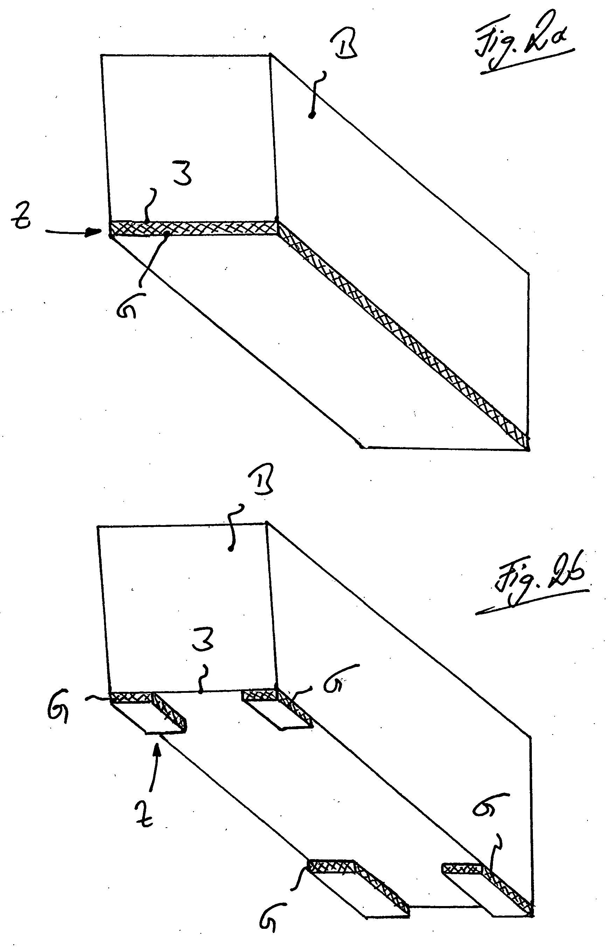

In den Figuren 2a bis 2d sind konstruktive Ausführungen der Gummibeschichtung G dargestellt. Gemäß der Figur 2a ist die Batterieblockunterseite 3 vollständig mit einem Gummibelag als Gummibeschichtung G versehen. Die Gummibeschichtung G kann auf der Batterieblockunterseite 3 aufvulkanisiert werden, wodurch eine dauerhafte und sichere Beschichtung der Batterieblockunterseite 3 erzielt wird. Die Gummibeschichtung G kann ebenfalls mit der Batterieblockunterseite 3 verklebt werden bzw. aufgestrichen oder auflackiert werden.

Bei der Figur 2b ist die Gummibeschichtung G punktuell an der Batterieblockunterseite 3 aufgebracht, beispielsweise an den Eckbereichen des Batterieblocks B. Die Gummibeschichtung G kann von Gummiplatten gebildet werden, die an der Batterieblockunterseite 3 verschraubt oder vernietet werden können, um eine dauerhafte und sichere Befestigung an der Batterieblockunterseite 3 zu erzielen.

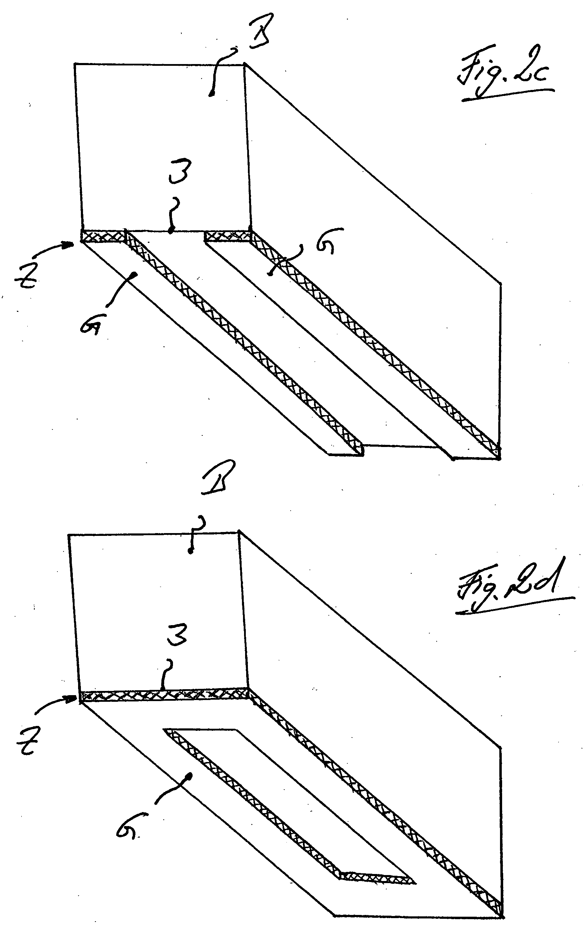

Bei der Ausführungsform der Figur 2c ist die Gummibeschichtung G von zwei Gummistreifen an den Längsseiten bzw. Querseiten der Batterieblockunterseite 3 des Batterieblocks B gebildet. Die Gummileisten können ebenfalls mit der Batterieblockunterseite 3 verschraubt oder vernietet werden, so dass eine dauerhafte und sichere Befestigung erzielbar ist.

Gemäß der Ausführungsform der Figur 2d ist die Gummibeschichtung G von einem umlaufenden streifenförmigen Rahmenband an der Außenseite der Batterieblockunterseite 3 des Batterieblocks B gebildet. Der Gummirahmen gemäß der Figur 2d kann ebenfalls auf eine oben beschriebenen Weisen an der Batterieblockunterseite 3 befestigt oder aufgebracht werden.

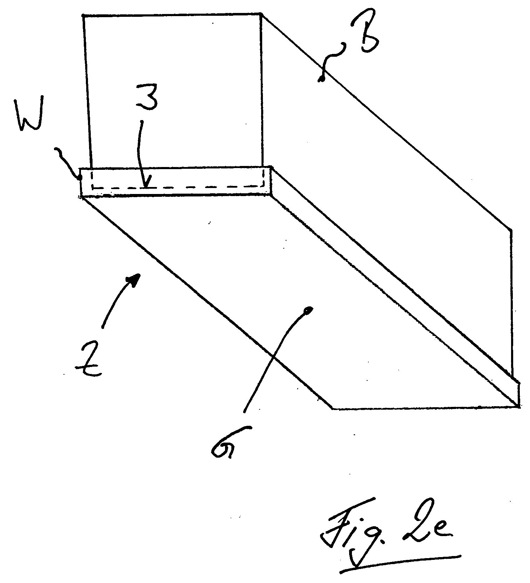

Bei der in der Figur 2e dargestellten Ausführungsform der Erfindung ist die von einer säurebeständigen Gummibeschichtung G bestehende rutschhemmenden Zwischenschicht Z von einer Gummiwanne W gebildet, in der der Batterieblock B mit der Batterieblockunterseite 3 steht. Die Gummiwanne W weist seitliche Wangen auf, die an dem unteren Bereich der Seitenwände des Batterieblocks B hochgezogen sind. Gemäß einer möglichen Ausführungsform sind die seitlichen Wangen an den Seitenwänden im Bereich von 5-15cm über die Unterseite nach oben hochgezogen. Die Gummiwanne G ist bevorzugt derart bemessen, dass die Gummiwanne W nach dem Überziehen auf den Batterieblock B durch Eigenelastizität an dem Batterieblock B gehalten wird. Hierdurch kann mit der Gummiwanne W ein bestehender Batterieblock B auf einfache Weise mit einer erfindungsgemäßen reibungserhöhenden und säurebeständigen Zwischenschicht Z an der Batterieblockunterseite 3 versehen und nachgerüstet werden. Alternativ ist möglich, die die Gummiwanne W mit den hochgezogenen seitlichen Wagen an den Seitenwänden des Batterieblocks B und/oder mit dem Wanneninnenbereich an der Batterieblockunterseite 3 zu verkleben oder anzuvulkansieren oder aufzuschrumpfen.

Mit der erfindungsgemäßen Gummibeschichtung G an der Batterieblockunterseite 3 des Batterieblocks B kann ein wirksamer Schutz des Batterieblocks B gegen Beschädigungen und ein Schutz vor Korrosion erzielt werden.

Gleichzeitig wirkt die von dem Gummibelag gebildete Gummibeschichtung B bei in dem Batteriefach 2 angeordneten Batterieblock B reibungserhöhend und rutschhemmend, so dass ein Verrutschen des Batterieblocks B in dem Batteriefach 2 des Flurförderzeugs F während des Betriebs des Flurförderzeugs F, insbesondere eine Verkanten des Batterieblocks B in dem Batteriefach 2, wirksam vermieden werden kann. Beim Batteriewechsel wirkt die Gummibeschichtung Gebenfalls reibungserhöhend und rutschhemmend an der Wechseleinrichtung W, so dass ein Verrutschen des Batterieblocks B während des Batteriewechsels auf der Aufstandsfläche der Wechseleinrichtung W und während des Transports auf der Wechseleinrichtung W zur Ladestation vermieden werden kann.

Mit der erfindungsgemäßen Gummibeschichtung G an der Batterieblockunterseite 3 des Batterieblocks B kann somit eine Beschädigung des Batterieblocks B während des Betriebs des Flurförderzeugs F und während des Batteriewechsels wirksam vermieden werden, wobei weiterhin ein Verkanten des Batterieblocks B in dem Batteriefach 2 insbesondere während des Batteriewechsels vermieden wird, so dass der Batteriewechsel erleichtert und vereinfacht wird und ein beschädigungsfreier Batteriewechsel erzielbar ist.

Die Gummibeschichtung G an der Batterieblockunterseite 3 des Batterieblocks B ermöglicht somit auf einfache Weise und mit geringem Bauaufwand ein Batteriewechselsystem, bei dem der Batterieblock B beschädigungsfrei während des Batteriewechsels aus dem Batteriefach 2 entnommen bzw. in das Batteriefach 2 hineinbewegt, zur Ladestation transportiert und auf der Ablagevorrichtung abgestellt werden kann und somit ein beschädigungsfreier Batteriewechsel erzielt werden kann. Zudem wird im Betrieb des Flurförderzeugs F ein Verrutschen des Batterieblocks B im Batteriefach 2 wirksam vermieden, so dass weiterhin ein komfortables Fahrverhalten und ein sicherer Betrieb des Flurförderzeugs F erzielt werden kann.

## Patentansprüche

1. Batteriewechselsystem eines Elektrofahrzeugs, insbesondere eines FlurFörderzeugs (F), mit folgenden Merkmalen:
• einem Batterieblock (B), der in einem Batteriefach (2) des Elektrofahrzeugs angeordnet ist und in im Wesentlicher horizontaler Richtung in das Batteriefach (2) hinein bzw, aus dem Batteriefach (2) heraus bewegbar ist,
• einer Wechseleinrichtung (W) umfassend eine Wechselvorrichtung (5) und/oder eine Ablagevorrichtung zur Handhabung und zum Transport des Batterieblocks (B),
• und einer Vorrichtung zur Fixierung des Batterieblocks (B) in dem Batteriefach (2) und auf der Wechseleinrichtung (W) in mindestens einer Bewegungsrichtung,
**dadurch gekennzeichnet, dass** die Vorrichtung zur Fixierung des Batterieblocks (B) in dem Batteriefach (2) und auf der Wechseleinrichtung (W) von einer reibungserhöhenden und rutschhemmenden Zwischenschicht (Z) gebildet ist, die zwischen der Batterieblockunterseite (3) und dem Batteriefachboden des Batteriefachs (2) des Elektrofahrzeugs und zwischen der Batterieblockunterseite (3) und einer mit der Batterieblockunterseite (3) zusammenwirkenden Aufstandsfläche der Wechseleinrichtung (W) angeordnet ist, wobei die Batterieblockunterseite (3) mit der reibungserhöhenden und rutschhemmenden Zwischenschicht (Z) versehen ist.

2. Batteriewechselsystem nach Anspruch 1, **dadurch gekennzeichnet, dass** die Zwischenschicht (Z) von einem Klettverschlusssystem gebildet ist, wobei eine Klettverschlusskomponente an der Batterieblockunterseite (3) angeordnet ist und eine weitere Klettverschlusskomponente an dem Batteriefachboden und der mit der Batterieblockunterseite zusammenwirkenden Aufstandsfläche der Wechseleinrichtung (W) angeordnet ist.

3. Batteriewechselsystem nach Anspruch 1, **dadurch gekennzeichnet, dass** die Zwischenschicht (Z) von einem metallischen Reibbelag, insbesondere einem Streckmetall, gebildet ist.

4. Batteriewechselsystem nach Anspruch 1, **dadurch gekennzeichnet, dass** die Zwischenschicht (Z) von einer an der Batterieblockunterseite (3) angeordneten Beschichtung gebildet ist.

5. Batteriewechselsystem nach Anspruch 4, **dadurch gekennzeichnet, dass** die Beschichtung von einer Gummibeschichtung (G), insbesondere einem Gummibelag, gebildet ist.

6. Batteriewechselsystem nach Anspruch 5, **dadurch gekennzeichnet, dass** die Gummibeschichtung (G) als eine Gummiwanne (W) ausgebildet ist, in der der Batterieblock (B) mit der Batterieblockunterseite (3) steht.

7. Batteriewechselsystem nach Anspruch 6, **dadurch gekennzeichnet, dass** die Gummiwanne (W) von der Batterieblockunterseite (3) an den unteren Bereich der Seitenwände des Batterieblocks (B) hinaufgezogen ist.

8. Batteriewechselsystem nach Anspruch 6 oder 7, **dadurch gekennzeichnet, dass** die Gummiwanne (W) derart bemessen ist, dass die Gummiwanne (W) nach dem Überziehen auf den Batterieblock durch Eigenelastizität an dem Batterieblock gehalten ist.

9. Batteriewechselsystem nach einem der Ansprüche 6 bis 8, **dadurch gekennzeichnet, dass** die Gummiwanne (W) an den Seitenwänden des Batterieblocks (B) und/oder mit einem Wanneninnenbereich an der Batterieblockunterseite (3) verklebt oder anvulkansiert oder aufgeschrumpft ist.

10. Batteriewechselsystem nach einem der Ansprüche 5 bis 9, **dadurch gekennzeichnet, dass** die Gummibeschichtung (G) bzw. der Gummibelag bzw, die Gummiwanne (W) aus einem säurebeständigen Gummi besteht.

11. Batteriewechselsystem nach einem der Ansprüche 1 bis 10, **dadurch gekennzeichnet, dass** die Batterieblockunterseite (3) punktuell oder flächig mit der Zwischenschicht (Z) versehen ist.

12. Batteriewechselsystem nach einem der Ansprüche 1 bis 11, **dadurch gekennzeichnet, dass** die Batterieblockunterseite (3) vollflächig oder teilflächig, insbesondere streifenförmig, mit der Zwischenschicht (Z) versehen ist.

13. Batteriewechselsystem nach einem der Ansprüche 1 bis 12, **dadurch gekennzeichnet, dass** die Zwischenschicht (Z) an der Batterieblockunterseite (3) aufvulkanisiert ist.

14. Batteriewechselsystem nach einem der Ansprüche 1 bis 12, **dadurch gekennzeichnet, dass** die Zwischenschicht (Z) an der Batterieblockunterseite (3) verklebt ist.

15. Batteriewechselsystem nach einem der Ansprüche 1 bis 12, **dadurch gekennzeichnet, dass** die Zwischenschicht (Z) an der Batterieblockunterseite (3) aufgestrichen oder lackiert ist.

16. Batteriewechselsystem nach einem der Ansprüche 1 bis 12, **dadurch gekennzeichnet, dass** die Zwischenschicht (Z) an der Batterieblockunterseite (3) lösbar befestigt ist.

17. Batteriewechselsystem nach einem der Ansprüche 1 bis 12, **dadurch gekennzeichnet, dass** die Zwischenschicht (Z) an der Batterieblockunterseite (3) stoffschlüssig verbunden ist.

18. Batteriewechselsystem nach einem der Ansprüche 1 bis 17, **dadurch gekennzeichnet, dass** die Wechseleinrichtung (W) von einer Rollenbahn gebildet ist, wobei die Zwischenschicht (Z) mit einer derartigen Härte versehen ist, dass ein Eindrücken der Rollen der Rollenbahn in die Zwischenschicht (Z) vermieden wird.

19. Batterieblock (B) mit einer an der Batterieblockunterseite (3) angeordneten reibungserhöhenden und rutschhemmenden Zwischenschicht (Z) zur Verwendung in einem Batteriewechselsystem nach einem der Ansprüche 1 bis 18.

## Claims

1. Battery changing system of an electric vehicle, in particular an industrial truck (F), with the following features:
• a battery block (B), which is arranged in a battery compartment (2) of the electric vehicle and is movable substantially in a horizontal direction into the battery compartment (2) and out of the battery compartment (2),
• a changing mechanism (W) comprising a changing device (5) and/or a depositing device for handling and transporting the battery block (B),
• and a device for fixing the battery block (B) in the battery compartment (2) and on the changing mechanism (W) in at least one direction of movement,
**characterized in that** the device for fixing the battery block (B) in the battery compartment (2) and on the changing mechanism (W) is formed by a friction-increasing and slip-inhibiting intermediate layer (Z), which is arranged between the battery block underside (3) and the battery compartment base of the battery compartment (2) of the electric vehicle and between the battery block underside (3) and a standing surface of the changing mechanism (W) that interacts with the battery block underside (3), the battery block underside (3) being provided with the friction-increasing and slip-inhibiting intermediate layer (Z).

2. Battery changing system according to Claim 1, **characterized in that** the intermediate layer (Z) is formed by a hook-and-loop system, one hook-and-loop component being arranged on the battery block underside (3) and another hook-and-loop component being arranged on the battery compartment base and the standing surface of the changing mechanism (W) that interacts with the battery block underside.

3. Battery changing system according to Claim 1, **characterized in that** the intermediate layer (Z) is formed by a metallic friction lining, in particular an expanded metal.

4. Battery changing system according to Claim 1, **characterized in that** the intermediate layer (Z) is formed by coating arranged on the battery block underside (3).

5. Battery changing system according to Claim 4, **characterized in that** the coating is formed by a rubber coating (G), in particular a rubber lining.

6. Battery changing system according to Claim 5, **characterized in that** the rubber coating (G) is formed as a rubber tray (W), in which the battery block (B) stands with the battery block underside (3).

7. Battery changing system according to Claim 6, **characterized in that** the rubber tray (W) is drawn up from the battery block underside (3) to the lower region of the side walls of the battery block (B).

8. Battery changing system according to Claim 6 or 7, **characterized in that** the rubber tray (W) is dimensioned in such a way that, after pulling up onto the battery block, the rubber tray (W) is held on the battery block by its own elasticity.

9. Battery changing system according to one of Claims 6 to 8, **characterized in that** the rubber tray (W) is adhesively bonded or vulcanized or shrink-fitted on the side walls of the battery block (B) and/or by a tray inner region on the battery block underside (3).

10. Battery changing system according to one of Claims 5 to 9, **characterized in that** the rubber coating (G) or the rubber lining or the rubber tray (W) consists of an acid-resistant rubber.

11. Battery changing system according to one of Claims 1 to 10, **characterized in that** the battery block underside (3) is provided with the intermediate layer (Z) at discrete points or over its surface area.

12. Battery changing system according to one of Claims 1 to 11, **characterized in that** the battery block underside (3) is provided with the intermediate layer (Z) over its full surface area or part of its surface area, in particular in the form of strips.

13. Battery changing system according to one of Claims 1 to 12, **characterized in that** intermediate layer (Z) is vulcanized on the battery block underside (3).

14. Battery changing system according to one of Claims 1 to 12, **characterized in that** the intermediate layer (Z) is adhesively bonded on the battery block underside (3).

15. Battery changing system according to one of Claims 1 to 12, **characterized in that** the intermediate layer (Z) is brushed or painted on the battery block underside (3).

16. Battery changing system according to one of claims 1 to 12, **characterized in that** the intermediate layer (Z) is detachably fastened to the battery block underside (3).

17. Battery changing system according to one of Claims 1 to 12, **characterized in that** the intermediate layer (Z) is integrally connected to the battery block underside (3).

18. Battery changing system according to one of Claims 1 to 17, **characterized in that** the changing mechanism (W) is formed by a roller conveyor, the intermediate layer (Z) being provided with such a hardness that pressing of the rollers of the roller conveyor into the intermediate layer (Z) is avoided.

19. Battery block (B) with a friction-increasing and slip-inhibiting intermediate layer (Z) arranged on the battery block underside (3) for use in a battery changing system according to one of Claims 1 to 18.

## Revendications

1. Système de remplacement de batterie pour véhicule électrique, notamment pour chariot élévateur (F), le système présentant les caractéristiques suivantes :
un bloc (B) de batterie disposé dans un compartiment (2) à batterie du véhicule électrique et apte à être déplacé essentiellement dans la direction horizontale pour être placé dans le compartiment (2) à batterie ou pour être extrait hors du compartiment (2) à batterie,
un dispositif de remplacement (W) comprenant un ensemble de remplacement (5) et/ou un ensemble de pose permettant de manipuler et de transporter le bloc (B) de batterie et
un ensemble qui immobilise le bloc (B) de batterie dans le compartiment (2) à batterie et sur le dispositif de remplacement (W) dans au moins une direction de déplacement,
**caractérisé en ce que**
l'ensemble immobilisant le bloc (B) de batterie dans le compartiment (2) à batterie et sur le dispositif de remplacement (W) est formé par une couche intermédiaire (Z) qui renforce le frottement et qui freine le glissement, disposé entre le côté inférieur (3) du bloc de batterie et le fond du compartiment (2) à batterie du véhicule électrique et entre le côté inférieur (3) du bloc de batterie et une surface de pose, coopérant avec le côté inférieur (3) du bloc de batterie, du dispositif de remplacement (W), le côté inférieur (3) du bloc de batterie étant doté de la couche intermédiaire (Z) augmentant le frottement et freinant le glissement.

2. Système de remplacement de batterie selon la revendication 1, **caractérisé en ce que** la couche intermédiaire (Z) est formée d'un système de fermeture à crochets, un composant de fermeture à crochets étant disposé sur le côté inférieur (3) du bloc de batterie et un autre composant de la fermeture à crochets étant disposé sur le fond du compartiment à batterie et la surface de pose du dispositif de remplacement (W) qui coopère avec le côté inférieur du bloc de batterie.

3. Système de remplacement de batterie selon la revendication 1, **caractérisé en ce que** la couche intermédiaire (Z) est formée par une couche métallique de frottement et en particulier un métal déployé.

4. Système de remplacement de batterie selon la revendication 1, **caractérisé en ce que** la couche intermédiaire (Z) est formée par un revêtement disposé sur le côté inférieur (3) du bloc de batterie.

5. Système de remplacement de batterie selon la revendication 4, **caractérisé en ce que** le revêtement est formé d'un revêtement de caoutchouc (G) et en particulier d'une couche de caoutchouc.

6. Système de remplacement de batterie selon la revendication 5, **caractérisé en ce que** le revêtement de caoutchouc (G) est configuré comme cuvette (W) en caoutchouc dans laquelle le bloc de batterie (B) repose par son côté inférieur (3).

7. Système de remplacement de batterie selon la revendication 6, **caractérisé en ce que** la cuvette (W) en caoutchouc remonte du côté inférieur (3) du bloc de batterie sur la partie inférieure des parois latérales du bloc (B) de batterie.

8. Système de remplacement de batterie selon les revendications 6 ou 7, **caractérisé en ce que** la cuvette (W) en caoutchouc a des dimensions telles que la cuvette (W) en caoutchouc est maintenue sur le bloc de batterie par son élasticité propre après avoir été étirée sur le bloc de batterie.

9. Système de remplacement de batterie selon l'une des revendications 6 à 8, **caractérisé en ce que** la cuvette (W) en caoutchouc est collée, vulcanisée ou rétractée sur les parois latérales du bloc (B) de batterie et/ou avec une partie intérieure de cuvette sur le côté inférieur (3) du bloc de batterie.

10. Système de remplacement de batterie selon l'une des revendications 5 à 9, **caractérisé en ce que** le revêtement (G) en caoutchouc ou la couche de caoutchouc ou la cuvette (W) en caoutchouc sont constitués d'un caoutchouc résistant aux acides.

11. Système de remplacement de batterie selon l'une des revendications 1 à 10, **caractérisé en ce que** le côté inférieur (3) du bloc de batterie est doté de la couche intermédiaire (7) ponctuellement ou sur toute sa surface.

12. Système de remplacement de batterie selon l'une des revendications 1 à 11, **caractérisé en ce que** le côté inférieur (3) du bloc de batterie est doté de la couche intermédiaire (Z) sur toute sa surface ou sur une partie de sa surface et en particulier suivant des rubans.

13. Système de remplacement de batterie selon l'une des revendications 1 à 12, **caractérisé en ce que** la couche intermédiaire (Z) est vulcanisée sur le côté inférieur (3) du bloc de batterie.

14. Système de remplacement de batterie selon l'une des revendications 1 à 12, **caractérisé en ce que** la couche intermédiaire (Z) est collée sur le côté inférieur (3) du bloc de batterie.

15. Système de remplacement de batterie selon l'une des revendications 1 à 12, **caractérisé en ce que** la couche intermédiaire (Z) est étalée ou appliquée au pinceau sur le côté inférieur (3) du bloc de batterie.

16. Système de remplacement de batterie selon l'une des revendications 1 à 12, **caractérisé en ce que** la couche intermédiaire (Z) est fixée de manière libérable sur le côté inférieur (3) du bloc de batterie.

17. Système de remplacement de batterie selon l'une des revendications 1 à 12, **caractérisé en ce que** la couche intermédiaire (Z) est reliée en correspondance de matière au côté inférieur (3) du bloc de batterie.

18. Système de remplacement de batterie selon l'une des revendications 1 à 17, **caractérisé en ce que** le dispositif de remplacement (W) est formé par une piste à rouleau, la couche intermédiaire (Z) étant dotée d'une dureté telle qu'un enfoncement des rouleaux de la piste à rouleau soit évité dans la couche intermédiaire (Z).

19. Bloc (B) de batterie doté d'une couche intermédiaire (Z) augmentant le frottement et freinant le glissement sur le côté inférieur (3) du bloc de batterie, et destiné à être utilisé dans un système de remplacement de batterie selon l'une des revendications 1 à 18.
